# NEW EUROPEAN PATENT SPECIFICATION

(11) **EP 0 406 354 B2**
(45) Date of publication and mention of the opposition decision: **20.08.2003**
(45) Mention of the grant of the patent: 08.03.1995
(21) Application number: 89912973.8
(22) Date of filing: 16.11.1989
(51) Int. Cl.: C04B 30/02, D21H 17/35

(54) **Process of manufacture of composite fiberboard**
Verfahren zur Herstellung von Verbundfaserplatten
Procédé de fabrication d'un panneau de fibres composite

(30) Priority: 25.11.1988 US 275914; 24.05.1989 US 356217; 15.11.1989 US 434041
(43) Date of publication of application: 09.01.1991
(73) Proprietor: Armstrong World Industries, Inc., Lancaster Pennsylvania 17604 (US)
(72) Inventor: FELEGI, John, Jr., Lancaster, PA 17603 (US); KEHRER, Kenneth, P., Lancaster, PA 17603 (US)
(74) Representative: Darby, David Thomas
(86) International application number: US8905042
(87) International publication number: WO90006342

(56) References cited:
- EP-A- 0 000 922
- EP-A- 0 108 381
- EP-A- 0 266 850
- WO-A-88/05100
- DE-A- 3 045 404
- DE-A- 3 322 357
- DE-A- 3 438 388
- DE-A- 3 506 710
- DE-A- 3 603 433
- US-A- 4 125 645
- US-A- 4 246 066
- US-A- 4 507 278
- US-A- 4 612 251
- US-A- 4 711 685
- WPIL, FILE SUPPLIER, accession no. 85-053153, Derwent Publications Ltd, London,GB; & JP-A-60 009 995
- WPIL, FILE SUPPLIER, accession no. 87-181545, Derwent Publications Ltd, London,GB; & JP-A-62 111 000
- Tappi, May 1972, vol. 55(5), pp. 761-768
- Römpp Chemie Lexikon, p. 2269
- Römpp Chemie Lexikon, pp. 1384-1385
- G. Wenske Dictionary, Chemistry, p. 215

## Description

This invention relates to a novel composite fiberboard of improved moisture resistance and its process of manufacture

The conventional composite fiberboards, typical of those used for acoustical ceilings, are composed of mineral wool, perlite and newsprint, which is primarily cellulosic fibers, as the primary ingredients. These materials are formed into boards from aqueous slurries using an organic binder such as starch.

The mineral wool may be composed of fibers of rock wool or basalt wool. It is also possible to use glass fibers, alone, or mixed with the mineral wool. The fibers, in general, have a diameter of 3 to 6 microns. The fibers may be used in the "sized" or "naked" state. Sizing agents such as mineral oils or acrylic polymer dispersions may be employed. These fibers contribute to the structural integrity and strength of the board.

The perlite is a volcanic glass ore composed of aluminum, calcium or other alkaline earth silicate. Prior to use in the fiberboard process, the perlite ore is expanded at high temperatures to obtain densities of 0,03 to 0.16 g/cm³(2 to 10 pounds/cubic foot (pcf)), preferably 0,05 to 0.11 g/cm³(3 to 7 pcf). Perlite contributes to the bulk and hardness of the board.

The third important ingredient is the so-called "newsprint". Specifically the newsprint is composed of cellulosic fibers. These fibers contribute to the wet strength of the board as it is converted from the slurry to the substantially solid cake enroute to becoming the board. Hereinafter, these fibers will be referred to as "cellulosic newsprint" fibers.

The mixture may also contain fillers, flameproofing agents, pigments, water repellents, etc. The fillers employed are usually finely divided clays, e.g. Kaolin, ball clay, etc.

In the process of preparing the board the ingredients are mixed together with the amount of water necessary to provide slurry consistency in conventional mixing and holding equipment. Additional water and "dry broke" may be added to the slurry prior to the addition of the starch binder. The starch is employed in amounts as high as about 15%, based on the three primary ingredients. The "dry broke" is predominately recycled board material that may have been rejected or cut from the commercially acceptable boards, as well as other waste products.

The slurry is then flowed onto the board forming wire of a Fourdrinier through a conventional head box Suction may be applied as well as pressure if desired, to assist in drainage and compaction using conventional means

The disadvantage of these conventional sound-insulating boards is their moisture sensitivity. Their tendency to sag in a moist atmosphere may make it necessary to coat or impregnate the back and/or face of the boards with, for example, thermosetting plastics or other moisture-resistant compositions. Not only does this add the extra coating step but further drying and heating become necessary. In short, a very expensive board results.

In U.S. Patent No. 4,587,278, sound-insulating boards which are based on mineral fibers and thermoplastic binders are disclosed to overcome the moisture-sensitive disadvantages of the starch-bound board The binders disclosed in this patent are polymers having glass transition temperatures from 38. to 80°C. These binders may be inadequate for the boards to retain dimensional stability without any substantial sag when exposed for prolonged periods at high temperatures with high humidity.

In European Application EP-A-0 266 850 published May 11, 1988, the applicant discloses the use of thermoplastic binders (latex compositions) having glass transition temperatures anywhere from 35°C to 115°C. The boards disclosed contain newsprint, perlite, mineral wool and clay as well as the latex binder. They are manufactured by incorporating the latex binder into a previously prepared aqueous slurry of the other ingredients. The resulting boards, according to the disclosure, display acceptable strength as determined by measuring the modulus of rupture (MOR) in accordance with ASTM 367-78. The moduli of rupture, as disclosed in the published application, vary from about 965 KPa (140 psi) to slightly above 1241 KPa (180 psi). The applicant also discloses an improvement in "dimensional stability" as measured by the composite board's sag resistance. Specifically, by exposing a 40 mm x 150 mm (1.5 x 6 inch) strip of board to 35°C (94°F), and 90% relative humidity for 96 hours while retaining a 330 gram weight at its center, the applicant asserts that he obtained a displacement of the center of the board of 1.0 mm or less

The object of this invention is to provide a composite board of mineral wool, perlite and 4-35% by weight of cellulosic newsprint fibers that display substantially no sag (less than 5.08 mm (0 2 inches or 200 mils)) when a 229 x 610 mm (9 x 24 inch) board. 15.2 mm (0.6 inch) thick, is supported at each end to form a 584 mm (23 inch) span and exposed to a temperature of 29.4°C (85°F) and a relative humidity of 95% for 24 hours.

The object is accomplished by using 2-15% by weight of a latex composition having a glass transition temperature (Tg) of at least 80°C in a manner such that the newsprint fibers are coated with the latex substantially completely prior to final binding of the composite mixture by the latex. For purposes of this invention of providing a normal commercial product by a commercially viable process, it is important that the ratio of the latex binder-to-newsprint be no greater than about 1-1.25, preferably no greater than 0.7, and most preferably, no greater than 0.4.

The ratio of the latex binder-to-newsprint being no greater than 0.7, preferably no greater than 0.4, applies to composite boards prepared from compositions containing at least 6% by weight of cellulose. Although these maximum ratios of latex binder-to-newsprint, i.e., 0.7, preferably 0.4, are applicable to cellulose contents below 6% by weight for the purpose of reducing sag in the ultimate composite board, it is advisable to use an additional amount of latex binder, i.e. up to a ratio of latex binder to newsprint of about 1-1.25, to provide the desired strength for the board. In other words, although the lower ratios, i.e. 0.7 and 0.4, are adequate for coating up to 6% newsprint fibers substantially completely with the latex, the use of the higher maximum ratios, i.e. 1-1.25 involving additional latex, is important for final binding of the composite mixture by the latex at these lower proportions of newsprint fibers, i.e. less than 6%, in the composite mixture.

The present invention therefore provides a process for making a composite board comprising 4 to 35% by weight cellulosic newsprint composed primarily of cellulose fibers, and 2 to 15% by weight of a thermoplastic polymeric binder, the ratio of the binder to the cellulosic newsprint being no greater than 1.25, perlite and mineral wool, wherein the components necessary to make the board are mixed with water to form an aqueous slurry, the cellulosic newsprint and at least a portion of the polymeric binder being mixed and the perlite and mineral wool being added subsequent to that mixing, and the slurry is flocculated while being fed to a mold and shaped, the shaped material drained of liquid and pressed into the shape and thickness of the board and then heated to solidify the board, the polymeric binder being coated on the cellulose fibers of the newsprint substantially completely before the slurry is fed to the mold.

The resulting composite board may comprise u to 87% by weight mineral wool, 5 to 65% perlite, up to 25% by weight clay, in addition to the cellulosic newsprint content is at least 6% by weight, the ratio of the binder to the newsprint is advantageously no greater than 0.7.

Composite boards produced by the process of the invention may comprise up to 75% by weight mineral wool and 4 to 15% by weight of the binder, the ratio of the binder to the cellulosic newsprint being no greater than 1 when the cellulosic newsprint content is less than 6% by weight and the ratio being no greater than 0.4 when the cellulosic newsprint content is at least 6% by weight

Composite boards may also comprise 20 to 50% by weight mineral wool, 20 to 50% by weight perlite, 10 to 30% by weight cellulosic newsprint and 4 to 15% by weight binder, the ratio of the binder to the cellulosic newsprint being no greater than 0.7.

The composite boards comprised as above may have a modulus of rupture, as measured by the procedure in ASTM D-1037, of greater than 1.03 MPa (150 psi). Such composite boards may comprise 20 to 40% mineral wool, 20 to 35% perlite and 6 to 10% binder, the glass transition temperature of the binder being preferably from 100°C to 115°C.

Composite boards having a modulus of rupture of greater than 1.03 MPa (150 psi) may also comprise 13 to 23% cellulosic newsprint and 4 to 10.5% binder having a glass transition temperature of from 100°C to 115°C. Alternatively, the board may comprise about 35% mineral wool, about 30% perlite, about 25% cellulosic newsprint, 8.5 to 10% binder having a glass transition temperature of 100°C and a ratio of binder to cellulosic newsprint of no greater than 0.4.

The selective deposition of the latex onto the cellulose fibers of the newsprint may be accomplished by any one of the following three processes:
1. The most general method is to introduce a coagulant prior to or along with the latex composition in the conventional ceiling board process. The coagulant is added to the whole or part of the board components of 0-87%, preferably 0-75% mineral wool fibers. 5-65% perlite, 0-25% clay, and 4-35% cellulosic newsprint, followed by the addition of as little as 2%, preferably 4-15% nf the latex composition. The latex may be added in one or more steps. To obtain the best results, it is important that sufficient coagulant is added to deposit an amount of latex to coat the available cellulose fibers of the newsprint substantially before the mixture is formed into a suitable wet form Thereafter, the form is heated to enable the remaining amount of latex to bind the components of the mixture in the form of the board.
2. A second method is to selectively deposit the latex composition with a coagulant on a filler such as clay; and then to deposit or coat the clay/latex onto the newsprint fibers before performing the remaining steps to form the board
3. A third method is to selectively deposit a cationic latex onto the cellulosic newsprint fibers or clay filler. The fiber and filler, being anionic. will retain the cationic latex material on its surface.

This method eliminates the need for the coagulant. This method may be used alone or in conjunction with the use of an anionic latex and coagulant as set forth in the methods 1 and 2.

The composite board may comprise mineral wool, perlite, 10 to 30 % by weight of cellulosic newsprint composed mainly of cellulose fibers, and 4 to 15% by weight of a thermoplastic polymeric binder, the ratio of the binder to the cellulosic newsprint used being no greater than 0.7.

The binder may be added in the form of an anionic latex dispersion in which the latex particle diameter is no greater than 0.12 micron.

If the binder is added in the form of an anionic latex dispersion a coagulant may be added to the mixture of components before the slurry is flocculated.

The invention will be more clearly understood by referring to the drawings and the description of the best mode for carrying out the invention that follows.

Figure 1 represents a flow sheet of the preferred method for carrying out the process of the invention.

Figure 2 is a sketch of the cross-section of the fiberboard product of the invention produced by selective deposition of the latex binder.

Figure 3 is a sketch of the cross-section of a fiberboard product produced without selective deposition of the latex binder.

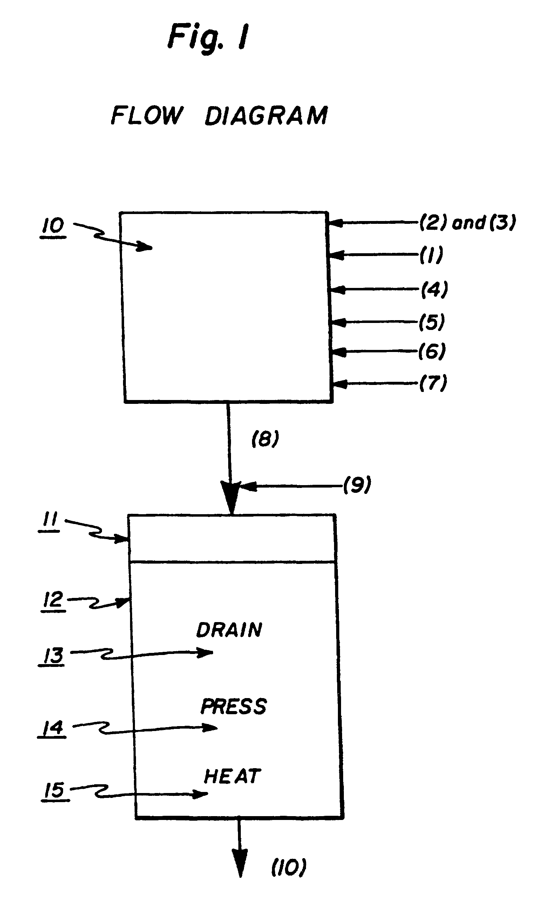

In the most preferred situation as shown in Figure 1, the coagulant (2), a poly (diallyldimethylammonium) chloride [DADMAC] having an average molecular weight of about 200,000 and a charge density of 5.92 milliequivalents/gram, is added to a portion of the total latex composition (3) Specifically, an anionic latex emulsion prepared from styrene, methyl methacrylate, and ethyl acrylate, as described, in general, in European Patent Application 0.266,850, may be used. The Tg of the copolymer is about 100°C. Anywhere from 10% to 100%. preferably 10% to 50%, of the total latex composition to be added, is added at this step. To this combination is added a previously prepared aqueous dispersion of the cellulosic newsprint fibers (1) under agitation in the mixer 10. The fiber dispersion is composed of 2-7% by weight of the fibers.

It should be understood that the amounts of coagulant and latex used in this step will depend upon the amount of cellulose fibers present. The amounts are interrelated and may be engineered to optimize the coating effect of the latex on the cellulosic fibers.

In the next step, the mineral wool (4), is added and the mixture is further agitated. Thereafter, if all the coagulants has not been added earlier, additional coagulant and the remainder of the latex (5) plus the perlite (6) and the "dry broke" (7) are added while agitation continues in the mixing tank.

The resultant slurry (8) is pumped onto the board-forming wire of a Fourdrinier through a conventional head box 11. A flocculant (9), a polyacrylamide of extremely high molecular weight, e.g. 2,000,000 - 10,000,000 and having a charge density of 0.1-0.8 milliequivalents/gram is added to the slurry just prior to its entry into the head box 11. The ingredients used in forming the slurry. based on percent by weight of solids, include about 25% cellulosic newsprint fibers, 35% mineral wool, 30% perlite, and about 10% latex. About 3.3% coagulant (based on the weight of the selectively deposited latex) is used.

The flocculated product is permitted to drain at 13 on the moving wire belt 12 of the Fourdrinier This is followed by the application of pressure at 14 and heat at 15 to dry the material in the form of a board (10).

The composite board, after the wet-forming process and subsequent drying, is sanded to a specific -gauge. The face of the composite board can be punched with acoustical pins to improve the board's acoustical properties. The face of the composite board can be decorated using varous methods: fissuring, routing, embossing, etching, painting (face and/or back), or any combination thereof, to produce the finished product. Some of these products are shown in Sweet's General Building Files Catalog Code 09500/ARO.

An anionic dispersion of a copolymer of styrene, methyl methacrylate and ethyl acrylate has been shown in the latex composition of the preferred embodiment. However, it should be understood that any copolymer, usually having a substantial amount of styrene, but having a Tg of 80 °C - 115 °C or higher may be used, preferably a Tg of 100 °C or higher. The latex composition will typically include from 50 to 100 weight percent of a hard monomer, e.g. styrene, methyl methacrylate (whose homopolymer has a Tg of at least 80°C) and up to 50 weight percent of a soft monomer. e.g. butadiene, ethyl acrylate, butyl acrylate (whose homopolymer has a Tg of less than 35°C). Preferably, the hard monomer is present in an amount from 65 to 95 weight percent and the soft monomer is present in an amount from 5 to 35 weight percent. An alpha-beta 3-ethylenically unsaturated carboxylic acid such as acrylic, methacrylic, fumaric, itaconic, aconitic, and various -alpha, beta-substituted acrylic acids, may also be incorporated in the copolymer to the extent of up to 10 weight percent, based on the weight of the final polymer.

The preferred latex particle diameter is less than or equal to 0.120 micron as measured using Brook-haven Model BI-90 particle size analyzer. To prepare the latex for particle size measurement, 2-3 drops of latex is added to a 0.001 M KCl solution to make a 200-300 ppm latex sample which is then sonicated.

Coagulants useful in the invention may be organic, low molecular weight polymers which reverse the charge on the latex particles without aggregation. The mechanism involves adsorption onto the latex particle The preferred coagulants for use in this invention are organic polymeric coagulants of low molecular weight (from about 10,000 up to about 1,000,000) and high charge (correspondingly, from about 8 down to about 3 milliequivalents/gram) which adsorb on the particle surfaces. Such coagulants are well known to those skilled in the art and include, inter alia, polyethyleneimines, polyamines, substituted polyamines, etc. The most preferred is poly-(diallyldimethylammonium) chloride [DADMAC] whose molecular weight is between 10,000 and 1,000,000 and whose charge density is 6 2 milliequivalents/gram.

The following theory is offered to explain the coagulant's mode of action. This theory should not be used to limit the scope of the invention. The coagulant particles first adsorb onto the latex particle surface in a flat configuration. They do not stick out from the surface appreciably. The positive charge of the polymer particles neutralizes the natural negative charge of the latex particles. In fact, the polymer adsorbs strongly enough to overcompensate the negative charge and reverse the latex particles natural charge from negative to positive. Since the cellulosic fibers are negative, the now positively charged latex particles will readily adsorb on the fibers. Also, since the particles are all the same positive charge, they will not aggregate in the presence of the calcium ion in the water. Without the coagulant, the calcium ion may tend to cause the latex particles to stick to the fibers: however, the calcium ion may also cause the latex particles to aggregate. Hence, the optimum function of the coagulant is to reverse the latex particle charge. eliminate the aggregation, and enhance the particle deposition onto the cellulose fibers.

The flocculants useful in the invention are also polymeric. However, they are usually of much higher molecular weight than the coagulants and of lower charge density. Thus, molecular weights for the flocculants may vary from 2,000,000 to 10,000,000 and their charge densities, from 0.1 to 3 milliequivalents per gram. The flocculants may be cationic, anionic, or nonionic. The flocculants that are useful in this field include polyacrylamides, copolymers of acrylamide with substituted acrylates, polyethyleneimides, etc. The preferred flocculant is a cationic polyacrylamide.

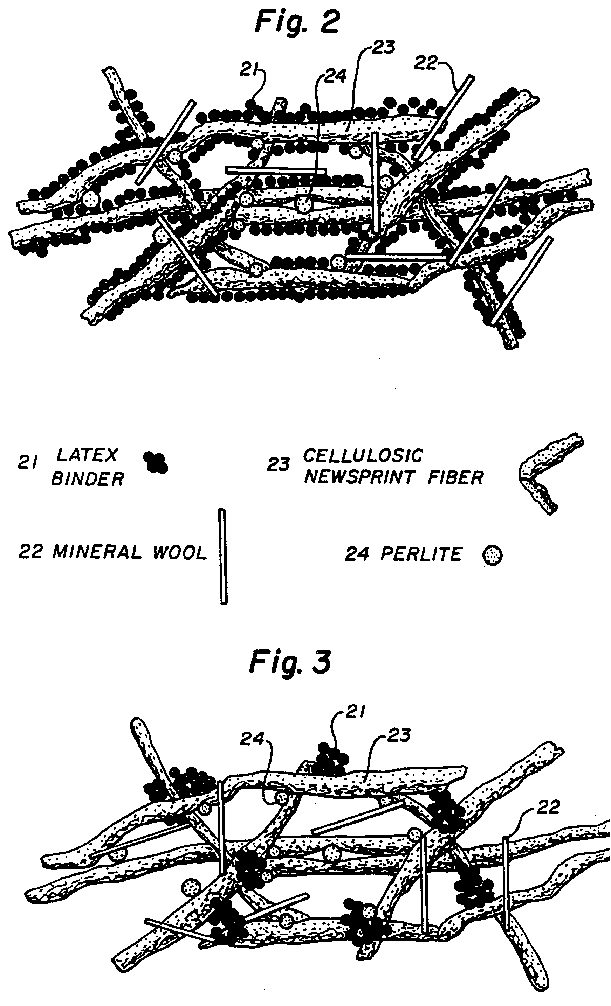

A cross-section of the product is shown in Figure 2. The product is composed of latex binder particles 21. mineral wool fibers 22. cellulosic newsprint fibers 23. and the perlite spherulites 24. It will be noted that the latex particles 21 are distributed over the surface of the cellulosic newsprint fibers 23. As discussed previously, this is accomplished by the strategic use of coagulant when using an anionic latex composition or by selective deposition using a cationic latex composition

In contrast to Figure 2, a product composed of latex binder particles 21, mineral wool fibers 22, cellulosic newsprint libers 23, and perlite spherulites 24 is shown in Figure 3. This product was obtained without selective deposition of the latex particles 21 Thus, an anionic latex composition, without the use of coagulant, tends to aggregate at the intersections of the fibers in the composite fiberboard Little or no protection of the cellulosic newsprint fibers is accomplished.

The invention will be more easily understood by referring to the examples that follow. In these examples, all the percentages are by weight unless otherwise specified.

The "sag" in millimetres (mils), was measured on a 15.2 mm (0.6 inch) thick board (nominal 5/8 inch (16 mm) board) that was 229 mm (9 inches) wide and 610 mm (24 inches) long. While being supported at both ends to form a 584 mm (23 inch) span, the board was exposed to a temperature of 29.4°C (85°F) and a relative humidity of 95%. After 24 hours of exposure, the displacement of the center of the 610 mm (24 inch) long board is measured in millimeters (mils).

The modulus of rupture (MOR) of the board is measured by the procedure given in ASTM D-1037. MOR is calculated as being equal to 3PL/2bd² psi (kPa) where:
P = peak force required to break the sample [kg] (lbs.)
L = span between the sample supports [metres] (inches)
b = width of the sample [metres] (inches)
d = thickness of the sample [metres] (inches)

MOR may be corrected for density variations by multiplying by D² where D = desired density/actual density.

The density of the board products set forth in the following examples are expressed in kilogrammes per cubic metre and in pounds per board foot (pbf ). The density in pounds per board foot is determined by weighing a sample board having dimensions of one foot square (30.5 cm square) and a thickness of one inch (25.4 mm). The density calculation for thinner or thicker boards is computed by dividing the weight of a one foot square (30.5 cm square) board sample by the thickness of the board sample expressed in inches.

### EXAMPLE 1

1.55 grams of a DADMAC coagulant was dispersed in 35.6 litres of water. 46.9 grams of latex* was then added to the extent of 0.13% solids 180.5 grams of pulped cellulose fibers in the form of newsprint was added to the extent of 0.6% total solids and the resulting composition was mixed for ten minutes.
* A Dow Chemical Co. carboxylated styrene/acrylate latex entitled "XU30780.00L" having an average particle size of 0.147 micron and a Tg of 100°C.

An additional 25.3 grams latex was added and mixed for one minute 252.7 grams of mineral wool and 217 grams of perlite were added and mixed for nine minutes to form the final slurry.

0.72 grams of a high charge, high molecular weight polyacrylamide as the flocculant was added until the water became clear and while the slurry was subjected to moderate agitation.

The flocculated furnish was poured into a mold apparatus at 1.6% solids. The furnish was drained on a retaining wire surface. The resulting wet mat was pressed to a thickness of 16.5 mm (0.650 inch) and dried at a temperature of 177 to 188°C (350 to 370 °F) in a forced air oven. The resulting board was 356 mm (14 inches) wide and 660 mm (26 inches) long, had a thickness of 17.8 mm (0.700 inch) and a density of 173 kg/m³ (0.90 pbf.). Its composition was as follows:
25% cellulosic newsprint
30% perlite
35% wool fibers, and
10% latex (6.5% having been added in the first step and 3.5% having been added thereafter.)

The MOR of the face-sanded board (15.0 mm (0.590 inch) thickness) was 1089 kPa (158 psi) and its "sag" measured 3.91 mm (154 mils).

### EXAMPLE 2

The procedure of Example 1 was repeated except that the same latex composition containing 72.2 grams of the polymer (the entire 10%) was added in the first step to 1.81 grams of DADMAC (2.5%) coagulant. The remaining ingredients were added as set forth in Example 1 and the board was prepared and tested as in Example 1. Its final composition was identical to that shown in Example 1. The MOR of the board was 1041 kPa (151 psi) and its "sag" measured - 4.34 mm (171 mils).

### CONTROL EXAMPLE A

The procedure of Example 2 was repeated except that no coagulant was used. All the components - newsprint, mineral wool and perlite - were dispersed in 35.6 liters of water and mixed before the entire latex composition was added. Thereafter. 3.6 grams of the flocculant was added and the board was prepared as in the previous examples for testing.

The MOR of the board was 972 kPa (141 psi), and its "sag" measured - 5.44 mm (214 mils).

### EXAMPLE 3

1.30 grams of a DADMAC coagulant was dispersed in 35.6 liters of water. 39.7 grams of the latex used in Examples 1 and 2 was then added to the extent of 0.12% solids. 180.5 grams of pulped cellulose fibers in the form of newsprint was added to the extent of 0.6% total solids and the resultant composition was mixed for ten minutes

An additional 21.7 grams of the latex was added and mixed for one minute. 252.7 grams of mineral wool and 227.4 grams of perlite were added and mixed for nine minutes to form the final slurry.

0.72 grams of a high charge, high molecular weight polyacrylamide as the flocculant was added until the water became clear and while the slurry was subjected to moderate agitation.

The flocculated furnish was poured- into a mold apparatus at 1.6% solids. The furnish was drained on a retaining wire surface. The resulting wet mat was pressed to a thickness of 16.5 mm (0.650 inch) and dried at a temperature of 177 to 188°C (350 to 370°F) in a forced air oven. The resulting board was 356 mm (14 inches) wide and 660 mm (26 inches) long, had a thickness of 17.8 mm (0.700 inch) and a density of 173 kg/m³ (0.90 pbf.). Its composition was as follows:
25% cellulosic newsprint
31.5% perlite
35% wool fibers, and
8.5% latex (5.5% having been added in the first step and 3.0% having been added thereafter)

The MOR of the face-sanded board (15.0 mm (0.590 inch) thickness) was 1165 KPa (169 psi) and its "sag" measured - 3.94 mm (155 mils).

### EXAMPLE 4

The procedure of Example 3 was repeated except that the latex composition containing 61.4 grams (the entire 8.5%) of the polymer was added in the first step to 1.55 grams of DADMAC (2.5%) coagulant. The remaining ingredients were added as set forth in Example 3 and the board was prepared and tested as in Example 3. Its final composition was identical to that shown in Example 3.

The MOR of the board was 1062 kPa (154 psi) and its "sag" measured - 3.40 mm (134 mils).

### EXAMPLE 5

1.81 grams of DADMAC was dispersed in 35.6 liters of water. 36.1 grams of a latex** with a 0.08 micron particle size (one-half the particle size used in the previous examples) was then added to the extent of 0.11% solids. 180.5 grams of pulped cellulosic newsprint fibers was added to the extent of 0.6% total solids and the resultant composition was mixed for ten minutes.
** A B. F. Goodrich styrene/acrylate latex entitled "Experimental Latex", #913-254-102, having an average particle size of about 0.110 micron and a Tg of 103°C.

An additional 25.7 grams latex was added and mixed for one minute. 252.7 grams of mineral wool and 227.4 grams of perlite were added and mixed for nine minutes to form the final slurry.

0.72 grams of a high charge, high molecular weight polyacrylamide was added until the water became clear and while the slurry was subjected to moderate agitation.

The flocculated furnish was poured into a mold apparatus at 1.6% solids. The furnish was drained on a retaining wire surface. The resulting wet mat was pressed to a thickness of 16.5 mm (0.650 inch) and dried at a temperature of 177 to 188°C (350 to 370°F) in a forced air oven. The resulting board was 356 mm (14 inches) wide and 660 mm (26 inches) long, had a thickness of 17.8 mm (0.700 inch) and a density of 173 kg/m³ (0.90 pbf). Its composition was as follows:
25% cellulosic newsprint
31.5% perlite
35% wool fibers, and
8.5% latex (5.0% having been added in the first step and 3.5% having been added thereafter)

The MOR of the face-sanded board (15.0 mm (0.590 inch) thickness) was 1131 kPa (164 psi) and its "sag" measured - 2.84 mm (112 mils).

### EXAMPLE 6

1.16 grams of DADMAC was dispersed in 35.6 liters of water. 25.3 grams of a similar particle size latex** as in Example 5 was then added to the extent of 0.07% solids. 180.5 grams of pulped cellulosic newsprint fibers was added to the extent of 0.6% total solids and the resultant composition was mixed for ten minutes.

An additional 44.0 grams latex** was added and mixed for one minute. 252.7 grams of mineral wool and 233.2 grams of perlite were added and mixed for nine minutes to form the final slurry.

0.72 grams of a high charge, high molecular weight polyacrylamide was added until the water became clear and while the slurry was subjected to moderate agitation.

The flocculated furnish was poured into a mold apparatus at 1.6% solids. The furnish was drained on a retaining wire surface. The resulting wet mat was pressed to a thickness of 16.5 mm (0.65 inch) and dried at a temperature of 177 to 188°C (350 to 370°F) in a forced air oven. The resulting board was 356 mm (14 inches) wide and 660 mm (26 inches) long, had a thickness of 17.8 mm (0.700 inch) and a density of 173 kg/m³ (0.90 pbf). Its composition was as follows:
25% cellulosic newsprint
32.3% perlite
35% wool fibers, and
9.3% latex (3.2% having been added in the first step and 6.1% having been added thereafter)

The MOR of the face-sanded board (15.0 mm (0.590 inch) thickness) was 1407 kPa (204 psi) and its "sag" measured - 3.68 mm (145 mils)

## Claims

1. A process for making a composite board comprising 4 to 35% by weight cellulosic newsprint composed primarily of cellulose fibers, and 2 to 15% by weight of a thermoplastic polymeric binder, the ratio of the binder to the cellulosic newsprint being no greater than 1.25, perlite and mineral wool, wherein the components necessary to make the board are mixed with water to form an aqueous slurry, the cellulosic newsprint and at least a portion of the polymeric binder being mixed and the perlite and mineral wool being added subsequent to that mixing, and the slurry is flocculated while being fed to a mold and shaped, the shaped material drained of liquid and pressed into the shape and thickness of the board and then heated to solidify the board, the polymeric binder being coated on the cellulose fibers of the newsprint substantially completely before the slurry is fed to the mold.

2. A process for making a composite board as claimed in claim 1, wherein the composite board comprises mineral wool, perlite, 10 to 30 % by weight of cellulosic newsprint composed mainly of cellulose fibers, and 4 to 15% by weight of a thermoplastic polymeric binder, the ratio of the binder to the cellulosic newsprint used being no greater than 0.7.

3. A process as claimed in claim 1 or claim 2, wherein the binder is added in the form of a latex dispersion in which the latex particle diameter is no greater than 0.12 micron.

4. A process as claimed in any one of claims 1 to 3, wherein a coagulant is added to the mixture of components before the slurry is flocculated.

5. A process as claimed in claim 4, wherein the mixture is formed in two steps, the first step in which only water, the newsprint, the coagulant and a portion of the anionic latex dispersion are used to form the mixture and the second step in which the remaining components and the remainder of the latex dispersion and, optionally, additional coagulant are added to form the mixture.

6. A process as claimed in any one of claims 1 to 5, wherein the thermoplastic polymeric binder is a styrene copolymer, especially one derived from a styrene/acrylate latex.

## Patentansprüche

1. Verfahren zur Herstellung einer Verbundplatte mit 4 bis 35 Gewichtsprozent Zellulosezeitungspapier, das hauptsächlich aus Zellulosefasern zusammengesetzt ist, mit 2 bis 15 Gewichtsprozent thermoplastischem polymeren Bindemittel, wobei das Verhältnis von Bindemittel zu Zellulosezeitungspapier nicht größer als 1,25 ist, mit Perlit und mit Mineralwolle, wobei
- die zur Herstellung der Platte erforderlichen Komponenten mit Wasser gemischt werden, um eine wässerige Aufschlämmung zu bilden,
- das Zellulosezeitungspapier und wenigstens ein Teil des polymeren Bindemittels gemischt werden,
- anschließend an das Mischen der Perlit und die Mineralwolle zugegeben werden,
- die Aufschlämmung während der Zuführung zu einer Form koagulieren gelassen und geformt wird,
- aus dem geformten Material Flüssigkeit abgezogen wird,
- das geformte Material auf die Form und Dicke der Platte gepreßt und dann zur Verfestigung der Platte erwärmt wird, und
- die Zellulosefasern des Zeitungspapiers im wesentlichen vollständig mit dem polymeren Bindemittel überzogen werden, ehe die Aufschlämmung der Form zugeführt wird.

2. Verfahren zur Herstellung einer Verbundplatte nach Anspruch 1, bei welchem die Verbundplatte Mineralwolle, Perlit, 10 bis 30 Gewichtsprozent Zellulosezeitungspapier, das hauptsächlich aus Zellulosefasern zusammengesetzt ist, und 4 bis 15 Gewichtsprozent thermoplastisches polymeres Bindemittel aufweist, wobei das verwendete Verhältnis von Bindemittel zu Zellulosezeitungspapier nicht größer als 0,7 ist.

3. Verfahren nach Anspruch 1 oder Anspruch 2, bei welchem das Bindemittel in Form einer Latexdispersion zugegeben wird, in welcher der Latexteilchendurchmesser nicht größer als 0,12 Mikron ist.

4. Verfahren nach einem der Ansprüche 1 bis 3, bei welchem der Komponentenmischung ein Koaguliermittel zugesetzt wird, ehe die Aufschlämmung koagulieren gelassen wird.

5. Verfahren nach Anspruch 4, bei welchem die Mischung in zwei Schritten hergestellt wird, wobei im ersten Schritt nur Wasser, das Zeitungspapier, das Koaguliermittel und ein Teil der anionischen Latexdispersion zur Bildung der Mischung verwendet werden und in dem zweiten Schritt die übrigen Komponenten und der Rest der Latexdispersion und wahlweise zusätzliches Koaguliermittel zur Bildung der Mischung hinzugefügt werden.

6. Verfahren nach einem der Ansprüche 1 bis 5, bei welchem das thermoplastische polymere Bindemittel ein Styrolcopolymer, insbesondere ein von einem Styrol-Akrylat-Latex abgeleitetes, ist.

## Revendications

1. Procédé pour la fabrication d'un panneau composite comprenant de 4 à 35 % en poids de papier journal cellulosique composé essentiellement de fibres cellulosiques, et de 2 à 15 % en poids d'un liant polymère thermoplastique, le rapport entre le liant et le papier journal cellulosique n'étant pas supérieur à 1,25, de perlite et de laine minérale, les composants nécessaires pour fabriquer le panneau étant mélangés avec de l'eau pour former une boue aqueuse, le papier journal cellulosique et au moins une partie du liant polymère étant mélangés et la perlite et la laine minérale étant ajoutées ensuite à ce mélange, et la boue étant floculée tandis qu'elle est amenée à un moule et façonnée, le matériau façonné étant drainé de liquide et pressé selon la forme et l'épaisseur du panneau et étant ensuite chauffé pour solidifier le panneau, le liant polymère ayant revêtu sensiblement complètement les fibres cellulosiques du papier journal avant que la boue ne soit amenée au moule.

2. Procédé pour la fabrication d'un panneau composite suivant la revendication 1, dans lequel le panneau composite comprend de la laine minérale, de la perlite, de 10 à 30 % en poids de papier journal cellulosique composé principalement de fibres cellulosiques, et de 4 à 15 % en poids de liant polymère thermoplastique, le rapport entre le liant et le papier journal cellulosique utilisé n'étant pas supérieur à 0,7.

3. Procédé suivant la revendication 1 ou la revendication 2, dans lequel le liant est ajouté sous forme d'une dispersion de latex dans laquelle le diamètre des particules de latex n'est pas supérieur à 0,12 micron.

4. Procédé suivant l'une quelconque des revendications 1 à 3, dans lequel un coagulant est ajouté au mélange de composants avant que la boue ne soit floculée.

5. Procédé suivant la revendication 4, dans lequel le mélange est formé en deux étapes, la première étape dans laquelle seuls l'eau, le papier journal, le coagulant et une partie de la dispersion de latex anionique sont utilisés pour former le mélange, et la seconde étape dans laquelle les composants restants et le reste de la dispersion de latex et, optionnellement, du coagulant supplémentaire sont ajoutés pour former le mélange.

6. Procédé suivant l'une quelconque des revendications 1 à 5, dans lequel le liant thermoplastique est un copolymère de styrène, en particulier l'un dérivé d'un latex styrène/acrylate.
